# EUROPEAN PATENT SPECIFICATION

(11) **EP 1 844 662 B1**
(45) Date of publication and mention of the grant of the patent: **31.07.2019**
(21) Application number: 07251489.6
(22) Date of filing: 04.04.2007
(51) Int. Cl.: A23G 3/00, A23L 25/00, A23G 3/34, A23G 3/20, A23G 3/26, B05D 1/24, A23P 20/12, A23P 20/18, A23P 20/13

(54) **Method for coating objects**
Verfahren zum Überziehen von Objekten
Procédé pour enrober des objets

(30) Priority: 07.04.2006 US 790396 P
(43) Date of publication of application: 17.10.2007
(73) Proprietor: THE QUAKER OATS COMPANY, Chicago, IL 60661-3716 (US)
(72) Inventor: Moore, Gary, McHenry, IL 60050 (US); Abu-Ali, Jareer, Arlington Heights, IL 60004 (US)
(74) Representative: Jenkins, Peter David

(56) References cited:
- FR-A- 2 440 774
- US-A- 4 842 790
- US-A- 5 876 775
- US-A- 5 937 744
- US-A- 5 964 146
- US-B1- 6 451 115

## Description

### FIELD OF THE INVENTION

This invention relates to an improvement in coating technology, specifically to a method of operating a tumble drum to obtain better quality product, with fewer defects.

### BACKGROUND OF THE INVENTION

A tumble drum is a piece of equipment used to mix and coat objects, such as food pieces. As a tumble drum rotates, the objects or pieces to be coated, and the coating(s), whether fluid coatings or particulate coatings, are mixed together. Mixing, in turn, promotes contact between the pieces to be coated and the coatings. Typically a tumble drum is used to tumble a base product while applying a liquid spray coating, such as sugar syrup for RTE cereal, vegetable oil for adhering a seasoning onto a chip, and oil-based flavors for a pet food. In these cases, the drum is designed and used to make the base product tumble under the spray so that all of the surfaces of the base product are covered. Batch tumble dryers (panners) are used in the same way to build up layers of chocolate or sugar coatings.

From an operational perspective, it is desirable that a tumble drum operate as efficiently as possible to make the best quality product possible. Efficiency is determined by many factors, including how rapidly objects can be properly coated. Rapid and proper coating, in turn, depends on how effective the contact is between object to be coated and the coating, so that the desired degree of coating can be achieved with the least amount of residence time in the tumble drum. Another factor related to efficiency is how much uncoated material (objects to be coated, excess coating, or improperly coated material) exits a tumble drum, for either recycling or to discard as waste. An additional efficiency related factor is how much excess coating must be added to a tumble drum to achieve the desired level of coating. Use of excess product takes up valuable volume in a tumble drum and therefore lowers the potential output rate. Use of excess coating increases the need to handle recycled unused coating material, and also increases the likelihood that some portion of the recycled coating material may be unsuitable for reuse, thereby generating waste.

As for quality, material leaving a tumble drum should be coated to the proper level of coating, as determined by the product design. Where a high degree of coating is called for, undercoated objects may be unacceptable. Also, a frequent defect that arises with tumble drum coated objects is where two or more objects coalesce to form a conglomerate of multiple objects bound together, where the product design is for uncoalesced individual objects covered with coating.

US-A-4,842,790 describes a technique and apparatus for producing closely sized high strength granular particles from low strength prills such as, for example, urea and ammonium nitrate. Feed prills are supplied to a rotary granulation drum in which the feed prills are lifted and dropped onto deflectors to form a curtain of particles that are then sprayed with molten urea.

US-A-5,964,146 describes the topical application of particulates for production of the reduced fat, low fat and no fat baked goods and snacks. As shown in Figures 1 and 2 of US-A-5,964,146, the apparatus has an inclined rotatable drum comprising a cylindrical wall, an open inlet end and an open outlet end. Baked good or snack pieces to be topped or coated with liquid adhesive and particulate compositions are directly supplied from an oven to a continuous conveyer belt which transfers the pieces to a vibratory conveyor which feeds the pieces into the drum inlet. Longitudinal vanes, ribs or baffles are mounted into the inside wall of the rotatable drum. The longitudinal vanes in conjunction with the inclined orientation of the drum and the rotation of the drum about its central longitudinal axis result in transporting and tumbling of the baked good or snack pieces through the drum cavity from the drum inlet to the drum outlet. A liquid adhesive sprayer sprays a liquid adhesive composition or liquid banding agent onto the pieces as they are tumbled. A particulate dispenser is mounted for dispensing a particulate curtain composition in certain substantial side by side relationship to the liquid spray. Multiple sequential passes through the liquid spray curtain and through the particulate curtain to provide a plurality of layers of adhesive composition and a plurality of layers of particulate composition.

US-A-5,937,744 discloses a convertible drum-type coating apparatus in which breading material is applied to food products using a rotary drum which tumbles the breading material and food product together using longitudinal flights in the drum.

### BRIEF SUMMARY OF THE INVENTION

In a first aspect, the present invention provides a method as set out in claim 1.

Aspects of the present invention provide an improved method of preparing objects coated with particulate or other solid pieces. In particular, the tumble drum is designed to minimize the base product from rolling or tumbling. Instead, the tumble drum lifts the product up as the drum rotates and then drops the product back down to the bottom of the drum. This avoids tumbling the product in the tumble drum. The dropping of the product drives the particulates into the object which improves adhesion to the object, thus improving particulate retention in downstream processing and reducing the amount of particulates that fall off the objects during shipping and handling.

Any suitable object can be coated such as food pieces. If the object is not itself tacky, the object is pre-coated with a tacky substance such as with a fluid, liquid, or semi-fluid coating. This coating is retained in a fluid or semi-fluid state during the particulate impregnation to provide a tacky surface.

In particular aspects, food-based objects are pre-coated with a tacky coating and then coated with particulates. The tumble drum process is used to contact the pre-coated food objects with the particulates in a manner to provide a particulate coated object. For example, in one embodiment, puffed cereal-based balls are coated with granola pieces.

The method of processing, is exemplified, in part, by how completely the granola can cover the pre-coated food pieces, how well the particulates adhere to the pre-coated food pieces, the reduction in the amount of excess granola required to achieve the desired level of coating, and the reduction of waste and recycled granola.

Aspects of the invention include improved tumble drum designs and processes that increase efficiency of operation, and at the same time reduce the likelihood of defective products, reduce the need to recycle materials, and reduce the amount of excess coating required to achieve a desired degree of coating.

Aspects of the present invention provide a novel method of processing that improves the contact, and the level of impact upon contact, between objects to be coated and coating materials.

Further aspects provide a novel method of processing that reduces the frequency of undercoated product and/or reduces the frequency of defective and unwanted conglomerate pieces and/or reduces the amount of recycled and unusable material.

The aspects, features and advantages of the present invention are merely exemplary and represent preferred embodiments of the present invention. It should be apparent to those skilled in the art that these embodiments are illustrative only and not limiting, having been presented by way of example only. All the features disclosed in this description may be replaced by alternative features serving the same purpose, and equivalents or similar purpose, unless expressly stated otherwise. Therefore, numerous other embodiments of the modifications thereof are contemplated as falling within the scope of the present invention as defined herein and equivalents thereto.

### BRIEF DESCRIPTION OF THE DRAWINGS

Figure 1 is an illustration of an exemplary use of a tumble drum for coating a pre-coated ball with granola.
Figure 2 is an illustration of a tumble drum having flights.
Figures 3a - 3b illustrate alternative flight shapes.
Figure 4 is a bar graph demonstrating the effect of process variables on the level of product defects using a 2.7 L/D drum.
Figure 5 is a bar graph demonstrating the effect of process variables on the level of product defects using a 4 L/D drum.
Figure 6 is a line graph of the effect of cluster average retention time in the drum on defect level.

It will be appreciated by those skilled in the art, given the benefit of the following description of certain exemplary embodiments of the food products disclosed here, that at least certain embodiments of the invention have improved or alternative formulations suitable to provide desirable taste profiles, nutritional characteristics, etc. These and other aspects, features and advantages of the invention or of certain embodiments of the invention will be further understood by those skilled in the art from the following description of exemplary embodiments.

### DETAILED DESCRIPTION OF THE INVENTION

Aspects of the present invention relate to an improved tumble drum design and method of processing resulting in better processing efficiencies, decreased waste and need to recycle unused materials, and improved product quality when used for coating operations. The improved tumble drum design actually removes a significant amount of the tumbling and rolling motion normally associated with a tumble drum. Instead, the improved design actually lifts and then drops the contents of the drum. This motion creates impact forces to drive the particulates into the surface of objects to be coated.

The design and methods of processing of the present invention are applicable to coating an assortment of objects, including food based objects, such as, but not limited to puffed cereal-based pieces, granola, fruit pieces (e.g., dried or semi-soft fruit pieces), extruded or otherwise baked or expanded grain-based centers, grain-based flakes, confectionery pieces, nuts, gels, gum, and other sweet or savory food pieces.

The objects are typically pre-coated with a tacky coating such as a syrup or fat-based food coating. Suitable pre-coatings include, but are not limited to, chocolate, flavored or non-flavored vegetable oil coatings, carbohydrate syrups, gelatin solutions, protein solutions, and hydrocolloid solutions.

Particulates used to coat the objects can be any type of food-related piece, including but not limited to fruit pieces, extruded or otherwise expanded grain-based pieces, crushed bakery pieces (such as broken cookie pieces), confectionery pieces, nuts, gels, gums, rolled whole grains (such as rolled oats) and pre-coated rolled whole grains (such as sugar coated rolled oats), wheat bran or germ, fractions of whole grains, and other sweet or savory food pieces. Common particulates include grains or mixtures of grains, including but not limited to granola-type mixtures.

For example, puffed cereal-based balls are first pre-coated with a liquid or semi-liquid tacky material. Then, the pre-coated balls are coated with granola particulates.

Other non-food related industries can also apply the teachings of this invention to non-food objects.

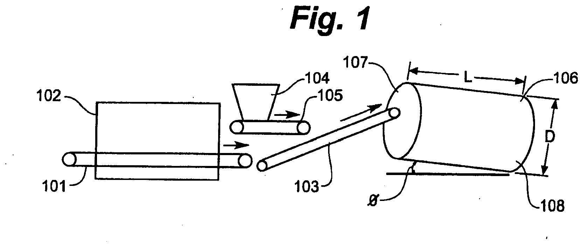

Turning to Figure 1, objects are transported along conveyor 101 through enrober 102 which pre-coats the objects with a tacky substance. The pre-coated objects are then transferred to another conveyor 103. Particulates are added to conveyor 103 via particulate feeder 104 and conveyor 105. The pre-coated objects and particulates are then transferred to the drum 106 via open end (entrance) 107. The particulate coated objects exit the drum opposite the entrance via open end (exit) 108. The drum may be made of any suitable metal or plastic or combination thereof.

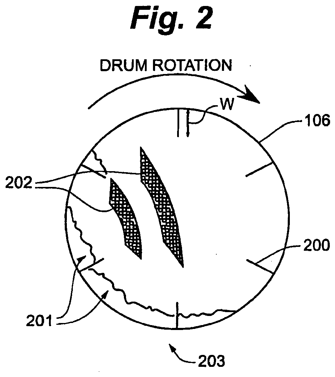

As shown in Figure 2, the drum 106 has flights 200 attached longitudinally within the drum to lift the contents 201 of the tumble drum while the tumble drum rotates. The contents 201 include the pre-coated objects and the particulates. The contents are trapped by the flights 200 near the bottom of the drum indicated generally by 203. The contents 201 are lifted by the flights 200 as the drum rotates and then the contents 201 are dropped as generally indicated by 202. The contents fall back to the bottom 203 of the drum. The impact with the drum surface drives the particulates into the pre-coated objects and further breaks apart any clumps that have formed. The rotation of the drum continues the cycle of lifting and dropping. A downward angle of the drum provides momentum to the product for passage from the inlet to the outlet of the drum.

The tumble drum designs and processing parameters can be adjusted to improve efficiency of coating and minimize defective products. Such variables include: drum volume, length to diameter ratio, flight design (height and spacing), drum operating temperature, drum rpm and angle, material of construction.

With the design of the present invention, the contact and degree of impact between objects and particulates can be increased, decreasing the level of excess granola needed to achieve a thorough coating of granola. The impact forces during mixing in the tumble drum reduce the number of defective conglomerates pieces.

The length (L) and diameter (D) are indicated in Figure 1. Exemplary drum sizes include a drum with a 1 foot diameter and a 4 foot length, and a drum with a 1.5 foot diameter with a 4 foot length. One skilled in the art will appreciate that a general representation of these dimensions is with a L/D value (length to diameter ratio). Here, the L/D values are 4 and 2.7. A generally applicable L/D range taught by this invention is an L/D of from about 1 to about 10. Exemplary L/D ranges include from about 3 to about 5. The L/D value can be used to scale up or to scale down the size of the tumble drum, as needed. For example, the D may be between 1 and 5 feet depending on whether the drum is used in a laboratory or in a production setting.

The table below shows the surface area and volume obtained with drums having various diameters and lengths.

| Diameter (ft) | Length (ft) | Drum L/D | Surface Area (ft²) | Volume (ft³) |
|---|---|---|---|---|
| 1.0 | 4.0 | 4.0 | 12.57 | 3.14 |
| 1.5 | 4.0 | 2.7 | 18.85 | 7.07 |
| 2.0 | 4.0 | 2.0 | 25.13 | 12.57 |
| 1.0 | 10.0 | 10.0 | 31.42 | 7.85 |
| 1.5 | 10.0 | 6.7 | 47.12 | 17.67 |
| 2.0 | 10.0 | 5.0 | 62.83 | 31.42 |
| 2.5 | 10.0 | 4.0 | 78.54 | 49.09 |

The drum angle is defined as the angle that the drum slopes downward from inlet towards outlet, from a horizontal reference. This angle is indicated by Φ in Figure 1. The angle is generally less than 20, typically less than 5, although, with the drum and flights of the present invention, the angle can be reduced to less than 3, to a minimum of 0. If required, the angle can be greater than 4, greater than 10, and as much as 20 degrees.

The flight width (w) (see Figure 2) will depend on the size of the object to be coated, but is at least ½ of the width of the object.

For example, a drum for processing an object shaped as a ball having a ½ inch diameter would have a flight width generally greater than about ¼ inch. That is, a ¼ inch flight would usually be sufficient to lift a ball having ½ inch diameter, but could be adjusted to suit the particular object's dimensions and properties. For example, the flight width will generally range from about ¼ inch to 2 inch in a 1 foot diameter drum, for a ball having a ½ inch diameter. One skilled in the art would understand how to adjust the flight width for different types of balls. The flight width would depend on factors such as the ball size and shape, and how sticky or slippery the surface of the ball is, and on how much product is being held in the drum at any instant. Theoretically, the flight width would not exceed ½ the diameter of the drum. Generally, the flight width would be less that 1/6 the diameter of the drum. For example, a suitable flight width would be about 1/12 the diameter of the drum.

The shape of the flight 200 is straight and fixed perpendicular to the wall of the drum in Figure 2, but it can also be affixed at different angles to the drum, or comprised of multiple angles. The flight 200 can also be designed with a slight helical angle to provide additional momentum to move product from the inlet of the drum to the outlet. For example, the flight may begin at the top of the drum at the inlet, form a helical curve through the drum, to end at the top of the drum at the outlet. If a helical flight is used, the drum angle may be minimized or be zero as the helical flight will also provide a forward motion to advance the particulates and objects through the drum. The flight 200 can also be interrupted or made up of discontinuous pieces as long as it is designed to lift and drop the contents 201 while minimizing rolling and tumbling of contents 201.

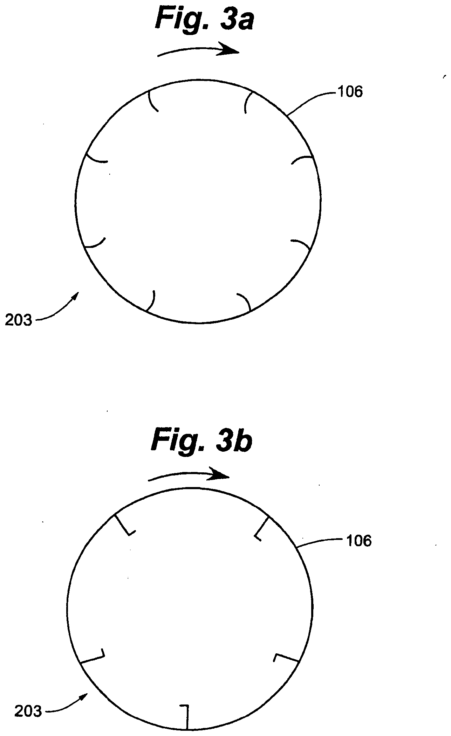

As shown in Figure 3a, the flight may be curved to scoop the objects and particulates. Alternatively, as shown in Figure 3b, the internal longitudinal edge of the flight may be bent, such as in a U or V shape, to also scoop the objects and particulates. When a scoop-type design is used, the objects and particulates will travel higher in the drum before falling. Flight design, attachment to the drum, and quantity of flights are within the skill of the art.

The drum shape is typically cylindrical, but other shapes may be used as is within the skill of the art. For example, the drum may be in the form of a rotating box. Flights may be attached to the side walls of the rotating box to achieve a similar effect as a cylindrical shaped drum. Moreover, a panner having flights may be used to coat object with particulates. A panner has a generally cylindrical shape drum but with a single opening to add and remove the contents of the drum. While tumble drum operates on a continuous basis, a panner operates on a batch basis. At the end of each batch, the contents must be removed from the panner such as by tilting the drum to discharge the contents.

Other features taught by the present invention include the rotational speed of the drum, retention time of objects in the drum (which in turn determines the number of times an object is lifted and dropped during mixing in the drum), and number of flights. Depending on the product (object to be coated and coating material), mixing in the drum will result in objects being lifted by the flights, and then dropped back into the bottom of the drum. The lifting and dropping results in impact when an object falls into the other objects and loose particulate in the drum. The impact at contact between object and particulate (e.g. ball and granola) will result in improved coating efficiency. As the object drives down into the particulate there will be a greater likelihood that some particulate will stick more to the pre-coated object, and greater coverage will result. An additional benefit is that less excess particulate will be needed to achieve a desired level of coating. Additionally, impact at contact between objects will help break up unwanted conglomerates.

The objects and particulates are retained within the drum for a time sufficient to obtain the desired coating on the object. Generally, the time spent in the drum is at least 15 seconds, more typically at least 30 seconds, for example 30 seconds to 5 minutes.

An excess amount of particulates are added to the drum than needed to coat the objects. For every 1 part of particulates that are required for coating the objects, 2-5 parts are added, typically 3 parts particulates are added for every 1 part required. After coating is completed, the excess particulates are recycled. For example if 100 lbs of particulates are required to coat 100 lbs objects (pieces) then 300 lbs of particulates are added. The excess ensures that the objects are completely coated with particulates.

### Examples

For the non-limiting examples of this invention, desirable results were achieved when the drum had 3 flights and the drum rotated at about 20 rpm, which in turn resulted in an object ball being lifted and dropped about 60 times per minute with the average object passing through the drum in one minute. Since the tumble drum is a continuous mixing device, some of the objects will have passed through in less time and some will have passed through in more time (i.e., there will be a range of retention times, with some objects passing through faster than the average retention time, and some objects passing through slower than the average retention time). One skilled in the art would understand from the guidance and teachings of the present invention how to adjust the drum design and processing conditions to accommodate a range of retention times that will result, so that even objects that pass through the tumble drum faster than the average retention time will experience the proper number of lifts and falls to obtain the proper amount of coating. The maximum number of drops will generally be limited by the ability of the objects and particulates to resist breakage.

### Example 1

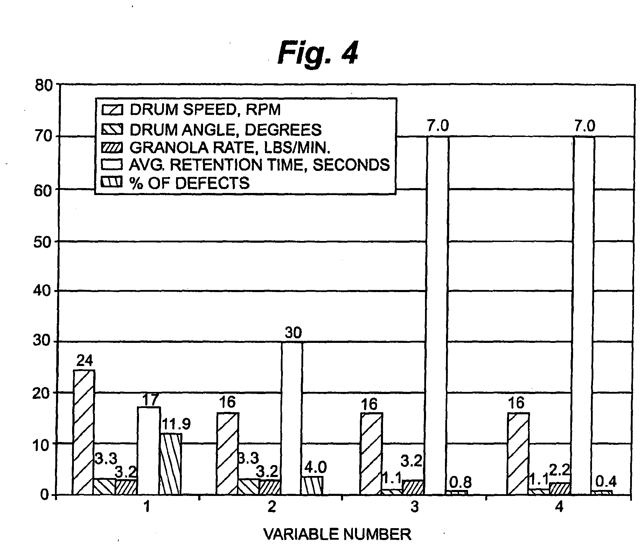

Tests were conducted demonstrating the effect of process variables on the level of product defects using a 2.7 L/D drum. Product defects include occurrence of unwanted multiple or conglomerate pieces. The results are shown in the bar graph of Figure 4. The bar graph shows that variables to adjust to control defects (the occurrence of unwanted multiple or conglomerate pieces) are drum rpm and drum angle. It was discovered that, using a drum with flights, improvements in level of product defects can be achieved by adjusting the screw rpm lower or the drum angle lower. The observations below are merely exemplary of how these variables can be adjusted, and one skilled in the art would be able to use these observations to properly design and adjust processing conditions for other uses. In this example, the objects were balls of puffed cereal and the particulates were granola.
- In comparing variable #1 vs #2, the drum rpm was reduced from 24 down to 16. In this case the defects dropped from 11.9% to 4.0%.
- In comparing variable #2 vs. #3, the drum angle was reduced from 3.3 degrees down to 1.1 degrees. The level of defects dropped from 4.0% down to 0.8%. The drum angle is defined as the angle that the drum slopes downward from inlet towards outlet, from a horizontal reference.
- In comparing all three variables, the level of defects is an inverse relationship with Average Retention Time (the average amount of time that product stays inside the tumble drum as it passes from the inlet to the outlet).
- In this example, the fewest level of defects occurred when a reduced drum angle was combined with a reduced drum speed.
- Also shown in the graph, at the right combination of drum angle and drum speed (Variable #4), the granola rate can be reduced from 3.2 lb/min, down to 2.2 lbs/min. without adversely affecting the product defect rate. This demonstrates the usefulness of this invention to enable lower granola rates.

### Example 2

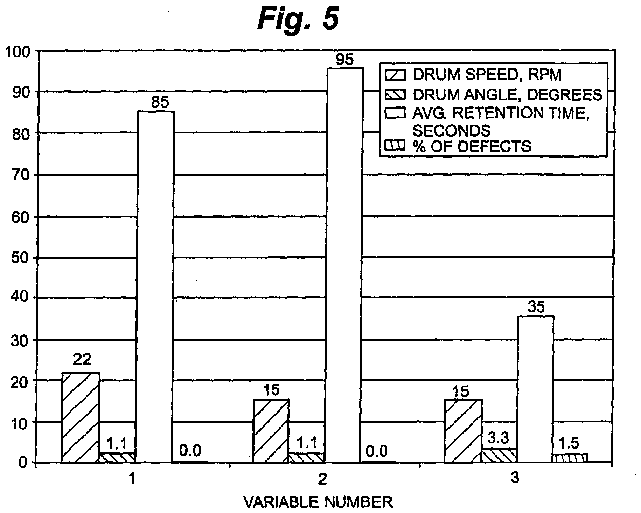

Tests were conducted demonstrating the effect of process variables on the level of product defects using a 4 L/D drum. The results are shown in the bar graph of Figure 5. Similar to the results for the 2.7 L/D drum, reducing the drum angle reduced the level of defects. The 4 L/D drum delivered at least as good (if not better) level of defects.
- In comparing variable #1 vs #2, the drum rpm was equally as good at 22 rpm and 15 rpm.
- In comparing variable #2 vs. #3, the drum angle increased from 1.1 degrees up to 3.3 degrees. The level of defects increased from 0.0% up to 1.5%.
- A drum with dimensions of 1 ft. diameter by 4 ft. long (4 L/D) produced excellent response for level of defects at 0.0%.

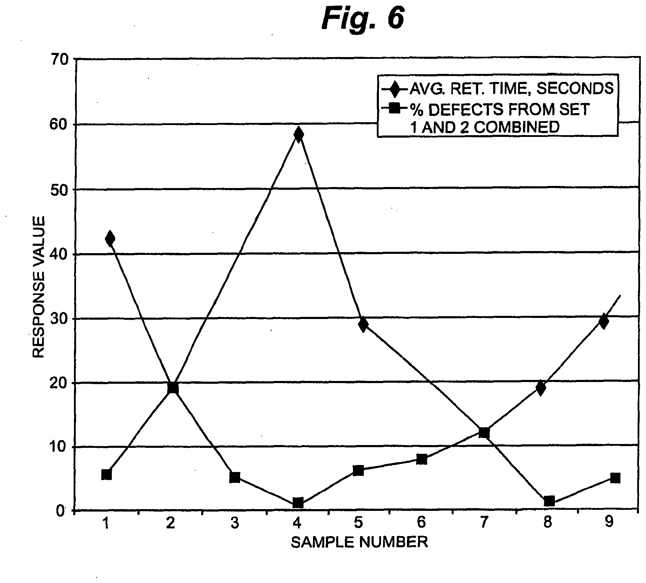

Figure 6 demonstrates the effect of product retention time in the drum. Adjusting product retention time can control defects (occurrence of unwanted multiple or conglomerate pieces). For example, Figure 6 shows reducing the average retention time below 20 seconds caused the defect level to rise above 10%.

### Example 3

Coated products were produced with full scale production rate. The size of drum for this example was 2.5 ft diameter by 10 ft long. The results are shown in the table below.

**Tumble Drum Process Conditions**

| Target process condtions for full scale production | | | |
|---|---|---|---|
| | Cinnamon | Chocolate | Peanut Butter |
| Feeder #1 rate, lb/hr (fresh granola) | 500 | 500 | 500 |
| fresh granola temperature, F | 70-80 | 70-80 | 70-80 |
| Feeder #2 rate, lb/hr (recycled granola) | 1550 | 1550 | 1550 |
| Recycled granola temperature, F | 65-75 | 65-75 | 65-75 |
| Total granola rate, lb/hr | 2050 | 2050 | 2050 |
| Center core (cereal grain extruded ball) | | | |
| ball size, inches | 0.5 | 0.5 | 0.5 |
| ball bulk density, gram/Liter | 110 | 110 | 110 |
| ball rate, lb/hr | 258 | 258 | 258 |
| Enrober: | | | |
| coating rate, lb/hr | 500 | 500 | 500 |
| coating temperature, F | 108-114 | 104-106 | 103-104 |
| Tumble drum: | | | |
| drum diameter, feet | 2.5 | 2.5 | 2.5 |
| drum length, feet | 10 | 10 | 10 |
| drum angle, degrees | 3 | 3 | 3 |
| drum rpm | 26 | 20 | 26 |
| drum temperature zone 1, F | 95 | 95 | 95 |
| drum temperature zone 2, F | 95 | 95 | 95 |
| number of flights | 10 | 10 | 10 |
| width of flights, inches | 2.5 | 2.5 | 2.5 |
| number of flights per minute | 260 | 200 | 260 |
| number of lifts & drops per minute | 130 | 100 | 130 |
| excess granola out of drum, lb/hr | 1550 | 1550 | 1550 |
| granola adhered to coated ball, lb/hr | 500 | 500 | 500 |

Thus, aspects of the invention include an apparatus for coating objects with particulates, the apparatus comprising a drum supported to rotate about a drum axis of rotation comprising at least an inlet, a length (L) and a diameter (D), the drum comprising at least 1 flight attached axially to the inner wall of the drum; wherein when the drum rotates each flight lifts and then drops objects and particulates such that the impact of the falling objects and particulates drives the particulates into the objects. The drum may comprise at least 2 to 20 flights and the flights may be spaced 0.3 to 2.0 feet apart. Each flight may have a width less than 1/6 the diameter of the tumble drum and a width at least ½ the width of the objects to be coated. The drum ratio L/D is 1 to 10, typically 3 to 5. The angle that the drum slopes downward from the inlet to the outlet from a horizontal reference is less than 20 degrees, for instance less than 5 degrees. The shape of the drum may be cylindrical. The flights may be flat, may form a trough to scoop the objects and particulates or may be helical

The Figures discussed above serve as non-limiting examples of the teachings of this invention. The aspects, features and advantages of the present description are merely exemplary and represent preferred embodiments of the present invention. It should be apparent to those skilled in the art that these embodiments are illustrative only and not limiting, having been presented by way of example only. All the features disclosed in this description may be replaced by alternative features serving the same purpose, and equivalents or similar purpose, unless expressly stated otherwise. Therefore, numerous other embodiments of the modifications thereof are contemplated as falling within the scope of the present invention as defined in the appended claims.

## Claims

1. A method of impregnating surfaces of objects with granola particulates comprising
(a) applying a liquid or semi-fluid binder to the objects to form pre-coated objects;
(b) adding the objects and granola particulates to a rotatable drum (106) having an inlet (107), a length (L) and a diameter (D), wherein the ratio L/D is 3 to 5, the drum comprising at least one flight (200), wherein each flight (200) has a width less than 1/6 the diameter of the drum (106) and each flight has a width at least 1/2 the width of the objects, wherein the drum (106) slopes downward from the inlet to the outlet from a horizontal reference at an angle less than 5 degrees; and
(c) rotating the drum (106) at a speed of about 30 rpm or less wherein each flight (200) lifts and then drops both the objects and the particulates, wherein the impact of the falling objects and particulates drives the particulates into the objects or into the coating of the pre-coated objects.

2. The method of Claim 1 wherein the drum (106) comprises 2 to 20 flights, preferably wherein the drum (106) comprises 8 to 12 flights.

3. The method of Claim 1 or Claim 2 wherein the drum flights (200) are spaced 0.3 to 2.0 feet apart on the drum circumference, preferably wherein the drum flights (200) are spaced about 0.6 to about 1 foot apart on the drum circumference.

4. The method of any preceding claim wherein the objects and particulates are retained within the drum (106) for at least 15 seconds.

5. The method of any preceding claim wherein excess particulates are recycled.

6. The method of any preceding claim wherein the objects are pre-coated and the binder on the pre-coated objects remains in a fluid or semi-fluid state.

7. The method of any preceding claim wherein one or more of the flights (200) are flat.

8. The method of any preceding claim wherein one or more of the flights (200) form a trough to scoop the objects and particulates.

9. The method of any preceding claim wherein one or more of the flights (200) are helical.

## Patentansprüche

1. Verfahren zum Imprägnieren von Oberflächen von Objekten mit "Granola" Partikeln, umfassend:
(a) Anwenden einer Flüssigkeit oder eines halb flüssigen Bindemittels auf Objekte, um vorbeschichtete Objekte zu bilden;
(b) Hineingeben der Objekte und der "Granola" Partikel in eine drehbare Trommel (106), die einen Einlass (107), eine Länge (L) und einen Durchmesser (D) aufweist, wobei das Verhältnis L/D 3 bis 5 beträgt, die Trommel zumindest einen Steg (200) umfasst, wobei jeder Steg (200) eine Breite von weniger als 1/6 des Durchmessers der Trommel (106) aufweist und jeder Steg eine Breite zumindest 1/2 der Breite der Objekte aufweist,
wobei sich die Trommel (106) vom Einlass zum Auslass a einer horizontalen Referenz in einem Winkel von weniger als 5 Grad nach unten neigt; und
(c) Drehen der Trommel (106) mit einer Geschwindigkeit von ca. 30 U/min oder weniger, wobei jeder Steg (200) sowohl die Objekte als auch die Partikel hebt und fallen lässt, wobei der Aufprall der fallenden Objekte und Partikel die Partikel in die Objekte oder in die Beschichtung der vorbeschichteten Objekte treibt.

2. Verfahren nach Anspruch 1, wobei die Trommel (106) 2 bis 20 Stege umfasst, vorzugsweise wobei die Trommel (106) 8 bis 12 Stege umfasst.

3. Verfahren nach Anspruch 1 oder Anspruch 2, wobei die Trommelstege (200) auf dem Trommelumfang 0,3 bis 2,0 Fuß beabstandet sind, vorzugsweise wobei die Trommelstege (200) auf dem Trommelumfang ca. 0,6 bis ca. 1 Fuß beabstandet sind.

4. Verfahren nach einem vorhergehenden Anspruch, wobei die Objekte und Partikel für zumindest 15 Sekunden innerhalb der Trommel (106) zurückbehalten werden.

5. Verfahren nach einem vorhergehenden Anspruch, wobei überschüssige Partikel recycelt werden.

6. Verfahren nach einem vorhergehenden Anspruch, wobei die Objekte vorbeschichtet sind und das Bindemittel auf den vorbeschichteten Objekten in einem flüssigen oder halbflüssigen Zustand bleibt.

7. Verfahren nach einem vorhergehenden Anspruch, wobei ein oder mehrere der Stege (200) flach sind.

8. Verfahren nach einem vorhergehenden Anspruch, wobei einer oder mehrere der Stege (200) einen Trog bilden, um die Objekte und Partikel zu schaufeln.

9. Verfahren nach einem vorhergehenden Anspruch, wobei ein oder mehrere der Stege (200) spiralförmig sind.

## Revendications

1. Procédé pour imprégner des surfaces d'objets aves des particules de granola consistant à :
(a) appliquer un agent de liaison liquide ou un agent de liaison semi-fluide sur les objets pour former des objets pré-enrobés ;
(b) ajouter les objets et les particules de granola à un tambour rotatif (106) comportant une entrée (107), une longueur (L) et un diamètre (D), dans lequel le ratio L/D est de 3 à 5, le tambour comportant au moins un flight (200), dans lequel chaque flight (200) a une largeur inférieure à 1/6 du diamètre du tambour (106) et chaque flight a une largeur d'au moins 1/2 de la largeur des objets, dans lequel le tambour (106) est incliné vers le bas de l'entrée à la sortie selon une référence horizontale à un angle inférieur à 5 degrés ; et
c) faire tourner le tambour (106) à une vitesse d'environ 30 tr/min ou moins, dans lequel chaque flight (200) soulève et ensuite laisse tomber et les objets et les particules, dans lequel l'impact des objets et des particules qui tombent entraîne les particules sur les objets et sur l'enrobage des objets pré-enrobés.

2. Procédé selon la revendication 1, dans lequel le tambour (106) comporte entre 2 et 20 flights, de préférence dans lequel le tambour (106) comporte de 8 à 12 flights.

3. Procédé selon, soit la revendication 1, soit la revendication 2, dans lequel les flights (200) du tambour sont espacées de 0,3 à 2,0 pieds l'un de l'autre sur la circonférence du tambour, de préférence dans lequel les flights du tambour (200) sont espacés d'environ 0,6 à environ 1 pied l'un de l'autre sur la circonférence du tambour.

4. Procédé selon l'une quelconque des revendications précédentes, dans lequel les objets et les particules sont maintenus dans le tambour (106) pendant au moins 15 secondes.

5. Procédé selon l'une quelconque des revendications précédentes, dans lequel toute particulaire excédentaire est recyclée.

6. Procédé selon l'une quelconque des revendications précédentes, dans lequel les objets sont pré-enrobés et l'agent de liaison appliqué sur les objets pré-enrobés demeure dans un état fluide ou semi-fluide.

7. Procédé selon l'une quelconque des revendications précédentes, dans lequel un ou plusieurs des flights (200) est/sont plat(s).

8. Procédé selon l'une quelconque des revendications précédentes, dans lequel un ou plusieurs des flights (200) forme/forment un creux pour recueillir les objets et les particules.

9. Procédé selon l'une quelconque des revendications précédentes, dans lequel un ou plusieurs des flights (200) est/sont hélicoïdal/hélicoïdaux.
